(19) Europäisches Patentamt / European Patent Office / Office européen des brevets

(11) **EP 3 576 067 A1**

(12) **EUROPEAN PATENT APPLICATION**
published in accordance with Art. 153(4) EPC

(43) Date of publication:
**04.12.2019 Bulletin 2019/49**

(51) Int Cl.:
*G08G 1/00* (2006.01)          *G06Q 40/08* (2012.01)
*G08G 1/13* (2006.01)

(21) Application number: **18744333.8**

(22) Date of filing: **16.01.2018**

(86) International application number:
**PCT/JP2018/000953**

(87) International publication number:
**WO 2018/139258 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **26.01.2017   JP 2017012276**

(71) Applicant: **Sony Corporation**
**Tokyo 108-0075 (JP)**

(72) Inventors:
• **IDE, Naoki**
**Tokyo 108-0075 (JP)**
• **FUKUI, Akira**
**Tokyo 108-0075 (JP)**
• **TANAKA, Yasufumi**
**Tokyo 108-0075 (JP)**
• **TAKAMATSU, Shingo**
**Tokyo 108-0075 (JP)**

(74) Representative: **Witte, Weller & Partner**
**Patentanwälte mbB**
**Postfach 10 54 62**
**70047 Stuttgart (DE)**

(54) **INFORMATION PROCESSING DEVICE AND METHOD, PROGRAM, AND INFORMATION PROCESSING SYSTEM**

(57)     The present disclosure relates to an information processing apparatus and method, a program, and an information processing system that make it possible to effectively narrow down suspicious cases of fraud.

A checkpoint generation section generates, as a checkpoint list, locations highly likely to be determined as dangerous driving even for driving as usual by using traveling information of a vehicle from a policyholder. A fraudulent user detection section generates a list of policyholders suspected of fraud in a declaration of the vehicle traveling information with reference to the generated checkpoint list by using the vehicle traveling information from the policyholder. The present disclosure is applicable, for example, to a fraud check support system that includes a terminal and a cloud system.

FIG. 2

## Description

[Technical Field]

The present disclosure relates to an information processing apparatus and method, a program, and an information processing system, and, relates, in particular, to an information processing apparatus and method, a program, and an information processing system that make it possible to effectively narrow down suspicious cases of fraud.

[Background Art]

Recent years have seen, in a world of automobile insurance, a technique called telematics insurance in which a discount is received on a monthly property insurance payment commensurate with traveling information such as distance traveled and amount of dangerous driving. However, there are policyholders who fraudulently acquire profits through fraudulent declaration of traveling information.

Under these circumstances, for example, freedom from suspicions of fraudulent declarations has been guaranteed by attaching an odometer image to prevent fraudulent declaration of traveling information, and traveled distance in particular (refer, for example, to PTL 1).

[Citation List]

[Patent Literature]

[PTL 1]
Japanese Patent Laid-Open No. 2016-147600

[Summary]

[Technical Problems]

In telematics insurance that uses traveling information such as acceleration and angular velocity, however, it is difficult to attach an odometer image. Also, these pieces of traveling information are acquired without any direct linkage to a vehicle itself, thus resulting in a risk of tampering.

The present disclosure has been devised in light of the foregoing circumstances, and can effectively narrow down suspicious cases of fraud.

[Solution to Problems]

An information processing apparatus of an aspect of the present technology includes: a checkpoint generation section adapted to extract, as a checkpoint, a location having a statistical tendency that driving is determined as dangerous driving on the basis of a statistical bias of traveling information of a vehicle; and a wrongdoer detection section adapted to make a determination on traveling information suspected of fraud and detect a subject suspected of fraud on the basis of data statistically processed from the traveling information at the checkpoint extracted by the checkpoint generation section.

The wrongdoer detection section can detect the wrongdoer on the basis of a frequency distribution of the traveling information at the checkpoint.

The wrongdoer detection section can detect the wrongdoer as a fraud suspect in the case where an absolute value of a deviation from a mean of all the traveling information at the checkpoint is higher than a given threshold.

The information processing apparatus can further include a tampering check section that accumulates, by using the traveling information, indices representing dangerous driving at a plurality of checkpoints on a driving route where the subject actually drove for evaluation.

The wrongdoer detection section can detect the wrongdoer with reference to the evaluation of the tampering check section.

The wrongdoer detection section can detect the wrongdoer by classifying the subject into one of three categories, namely, dangerous, normal, and suspected of fraud with reference to the indices representing dangerous driving accumulated by the tampering check section.

The information processing apparatus can further include a database processing section that generates a traveling information database by clustering the traveling information for each location and finding a statistic of the traveling information for each location. The checkpoint generation section can extract the checkpoint with reference to the traveling information database generated by the database processing section.

The checkpoint generation section can extract, as the checkpoint, a location where the mean of values indicated by the indices representing dangerous driving is large and where a distribution thereof is small.

The checkpoint includes a location where there is a significant tendency that at least one of three determinations, namely, abrupt braking, abrupt steering, and abrupt acceleration, is made in a determination regarding dangerous driving.

The traveling information includes vehicle information of the vehicle, locations, sensor information, or information acquired by processing these pieces of sensor information by using linear or non-linear transform.

In an information processing method of an aspect of the present technology, an information processing apparatus extracts, as a checkpoint, a location having a statistical tendency that driving is determined as dangerous driving on the basis of a statistical bias of traveling information of a vehicle, and detects a subject suspected of fraud by making a determination on traveling information suspected of fraud on the basis of data statistically processed from the traveling information at the checkpoint extracted.

A program of an aspect of the present technology causes a computer to function as: a checkpoint generation section adapted to extract, as a checkpoint, a location having a statistical tendency that driving is determined as dangerous driving on the basis of a statistical bias of traveling information of a vehicle; and a wrongdoer detection section adapted to make a determination on traveling information suspected of fraud and detect a subject suspected of fraud on the basis of data statistically processed from the traveling information at the checkpoint extracted by the checkpoint generation section.

In an aspect of the present technology, a location having a statistical tendency that driving is determined as dangerous driving is extracted as a checkpoint on the basis of a statistical bias of traveling information of a vehicle. Then, a determination is made on traveling information suspected of fraud, and a subject suspected of fraud is detected on the basis of data statistically processed from the traveling information at an extracted checkpoint.

An information processing system of another aspect of the present technology includes a terminal and an information processing apparatus. The terminal includes an information acquisition section and a transmission section. The information acquisition section acquires traveling information of a vehicle. The transmission section sends the acquired traveling information of the vehicle. The information processing apparatus includes a checkpoint generation section and a wrongdoer detection section. The checkpoint generation section extracts, as a checkpoint, a location having a statistical tendency that driving is determined as dangerous driving on the basis of a statistical bias of the traveling information of the vehicle sent from the transmission section. The wrongdoer detection section detects a subject suspected of fraud by making a determination on traveling information suspected of fraud on the basis of data statistically processed from the traveling information at the checkpoint extracted by the checkpoint generation section.

In another aspect of the present technology, traveling information of a vehicle from a policyholder is acquired, and the acquired traveling information of the vehicle is sent by a terminal. Then, by the information processing apparatus, a location having a statistical tendency that driving is determined as dangerous driving is extracted as a checkpoint on the basis of a statistical bias of the traveling information of the vehicle, and a determination is made on the traveling information suspected of fraud, and a subject suspected of fraud is detected on the basis of data statistically processed from the traveling information at the extracted checkpoint.

[Advantageous Effect of Invention]

According to the present technology, it is possible, in particular, to effectively narrow down suspicious cases of fraud.

It should be noted that the effects described in the present specification are merely illustrative, that effects of the present technology are not limited to those described in the present specification, and that there may be additional effects.

[Brief Description of Drawings]

[Fig. 1]

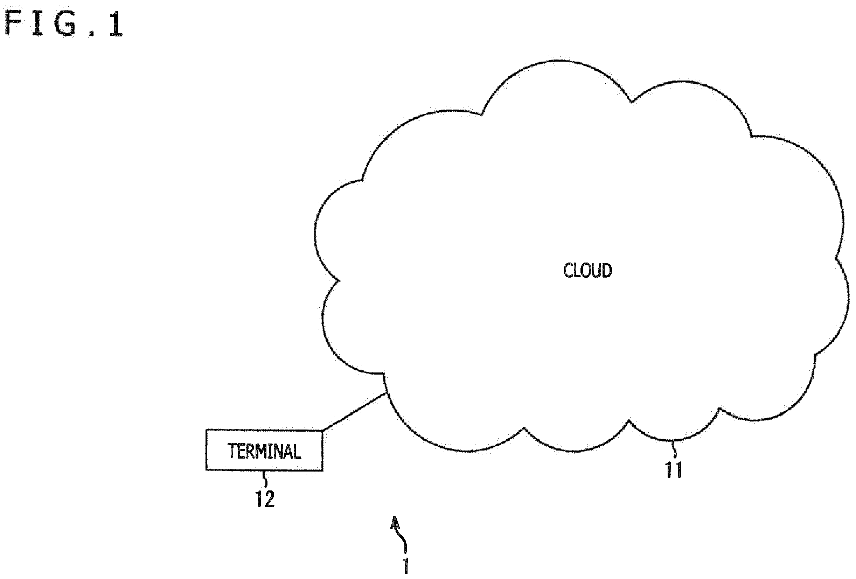

Fig. 1 is a schematic configuration diagram of a fraud check support system to which the present technology is applied.
[Fig. 2]

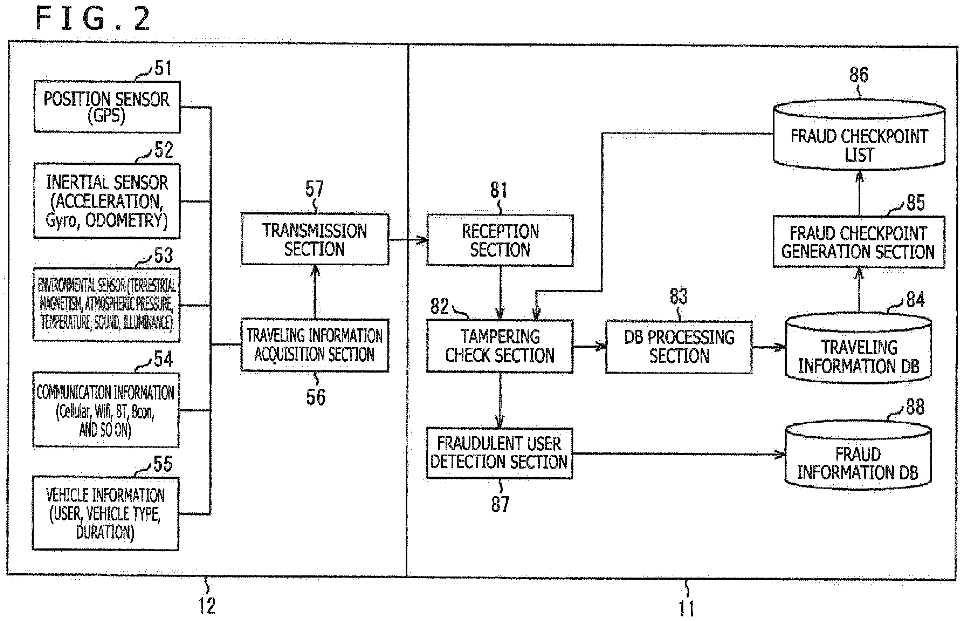

Fig. 2 is a block diagram illustrating a detailed configuration example of the fraud check support system.
[Fig. 3]

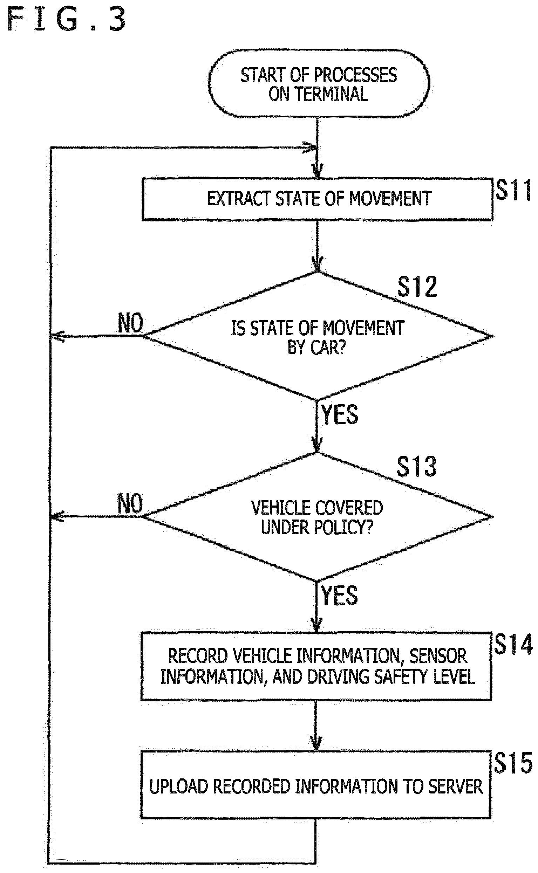

Fig. 3 is a flowchart describing processes performed by a terminal.
[Fig. 4]

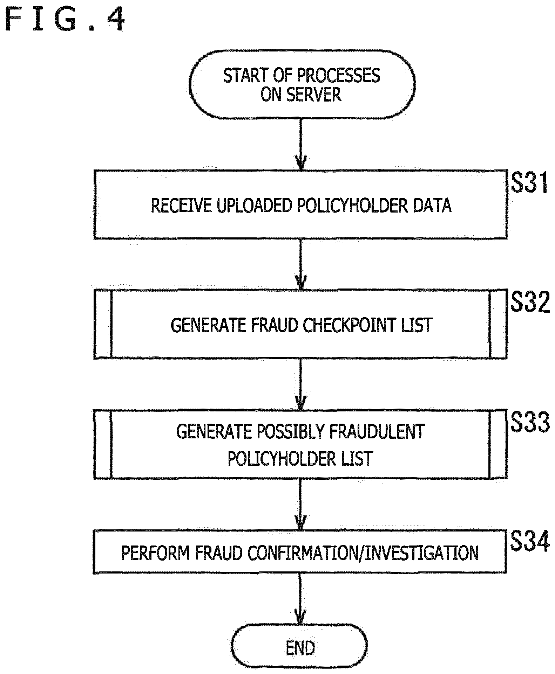

Fig. 4 is a flowchart describing processes performed by a cloud service server.
[Fig. 5]

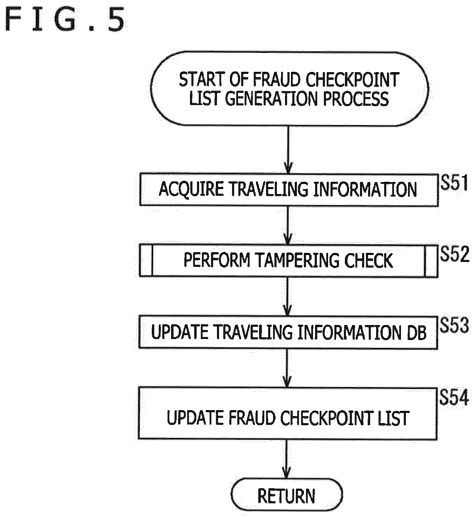

Fig. 5 is a flowchart describing a fraud checkpoint list generation process in step S32 in Fig. 4.
[Fig. 6]

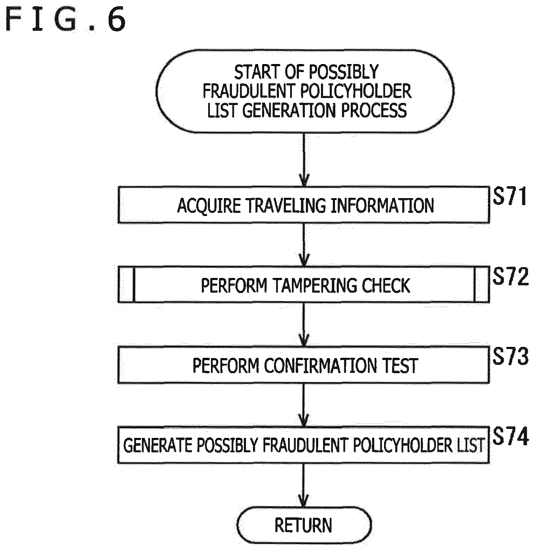

Fig. 6 is a flowchart describing a possibly fraudulent policyholder list generation process in step S33 in Fig. 4.
[Fig. 7]

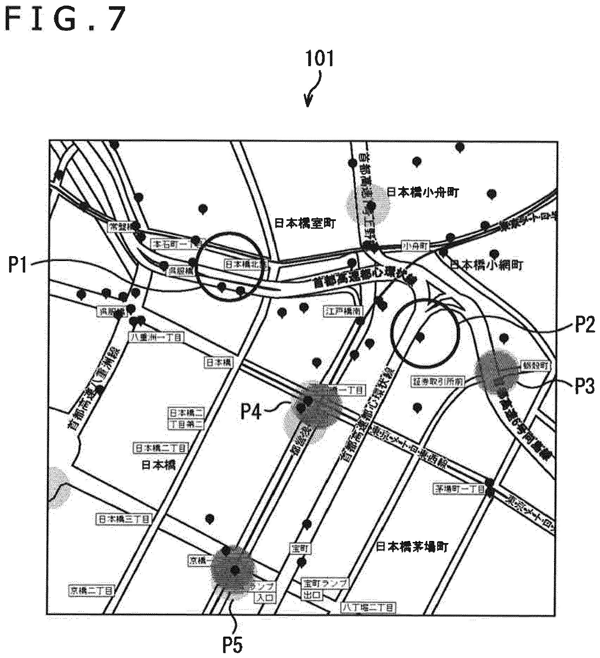

Fig. 7 is a diagram describing a fraud checkpoint list.
[Fig. 8]

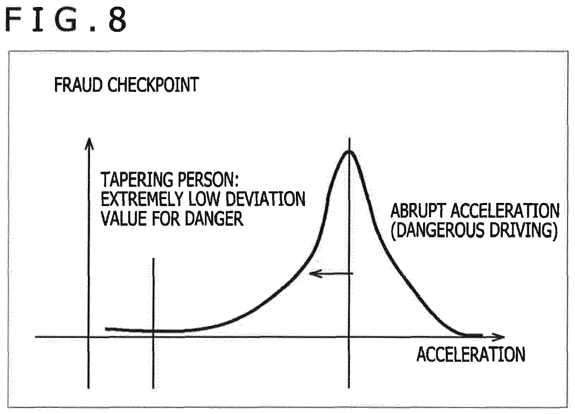

Fig. 8 is a diagram describing a false positive point.
[Fig. 9]

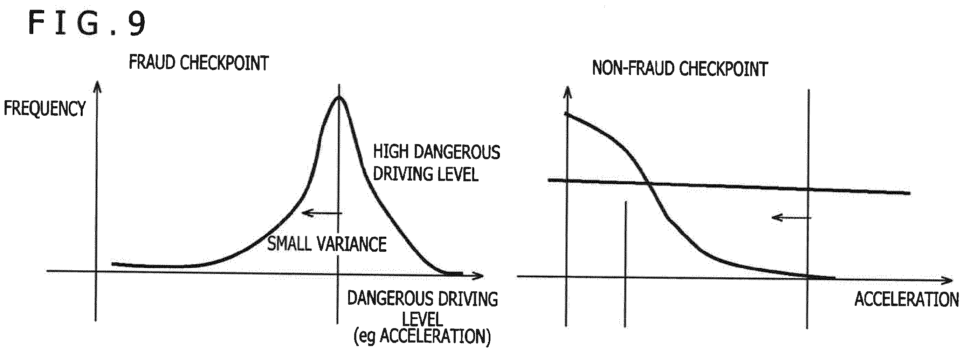

Fig. 9 is a diagram describing a method for deciding a fraud checkpoint itself.
[Fig. 10]

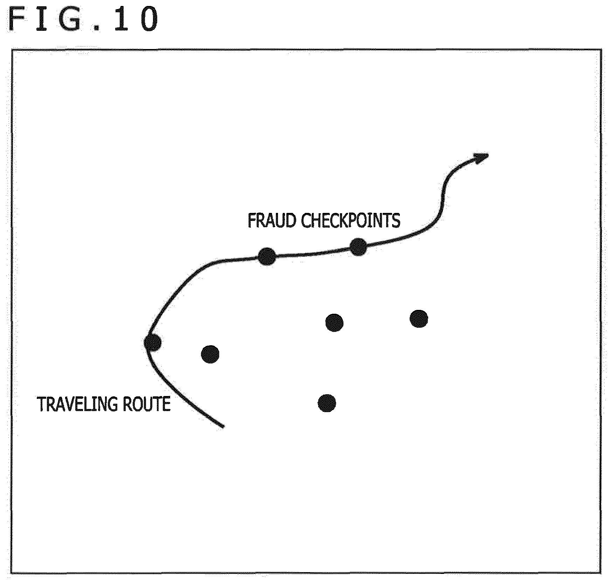

Fig. 10 is a diagram describing accumulative evaluation.
[Fig. 11]

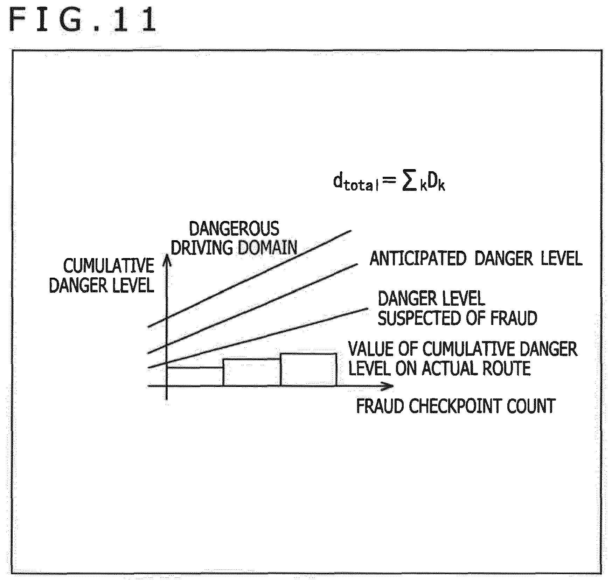

Fig. 11 is a diagram describing a method for discriminating between three values, namely, dangerous driver, driver suspected of fraud, and normal driver.
[Fig. 12]

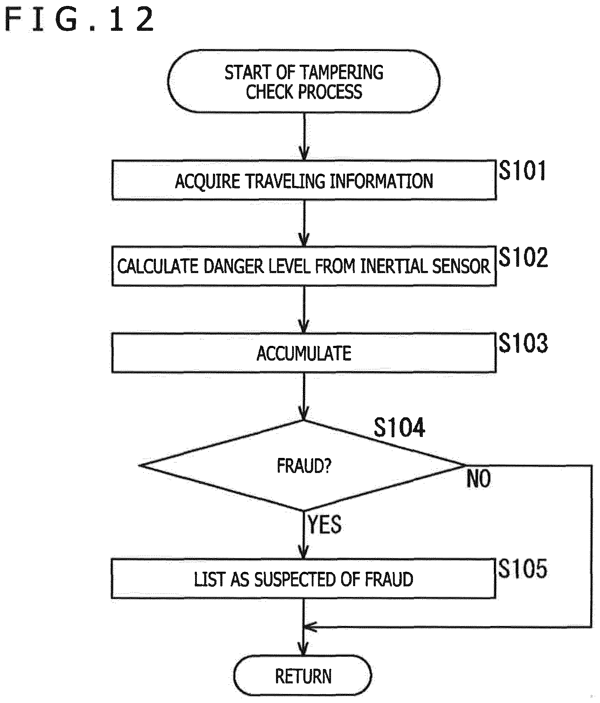

Fig. 12 is a flowchart describing an example of a tampering check process.
[Fig. 13]

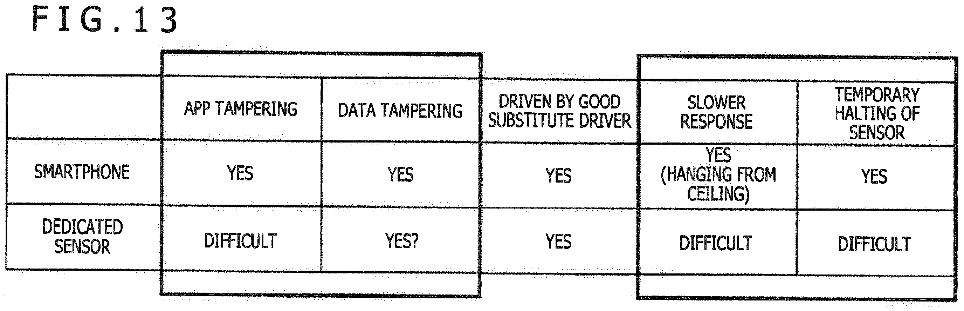

Fig. 13 is a diagram describing an effect achieved by the present technology.
[Fig. 14]

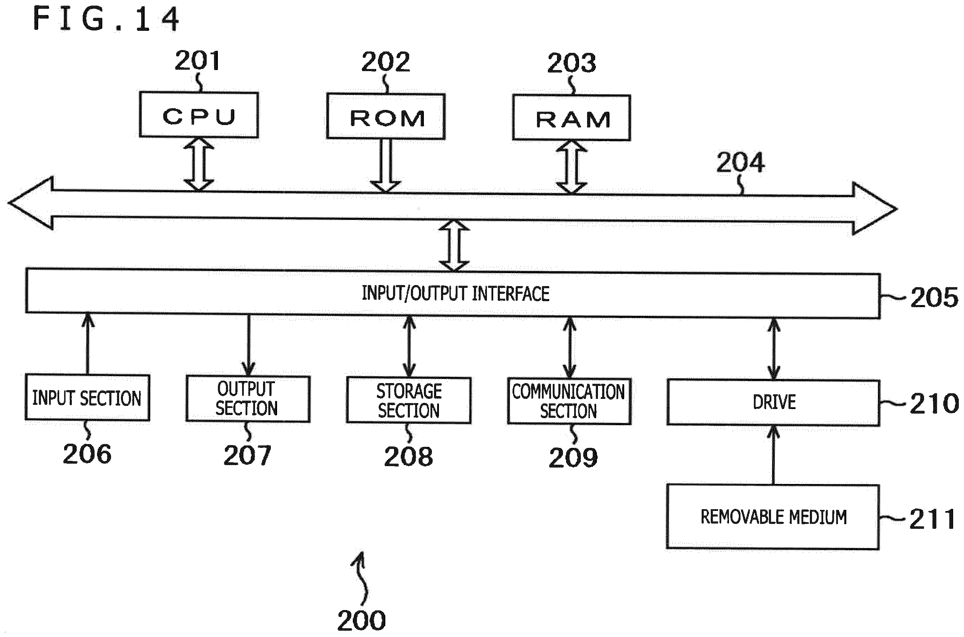

Fig. 14 is a block diagram of an example of a personal computer to which the present technology is applied.

[Description of Embodiment]

A detailed description will be given below of a mode for carrying out the present disclosure (hereinafter referred to as an embodiment).

<Configuration Example of the Fraud Check Support System>

Fig. 1 illustrates an example of a schematic configuration of a fraud check support system to which the present technology is applied.

A fraud check support system 1 illustrated in Fig. 1 is a system for providing fraud check support that makes it possible to effectively narrow down policyholders suspected of fraud (hereinafter also referred to as possibly fraudulent policyholders) by sensing information with sensors, generating a fraud checkpoint list and a possibly fraudulent policyholder list on the basis of the sensed information, and screening safe policyholders. That is, a list of policyholders suspected of fraud is used as screening information.

This fraud check support system 1 may be realized by a cloud service 11 and so on. The cloud service 11 receives sensed information from a terminal 12 that is connected to the cloud service 11 and generates a fraud checkpoint list and a possibly fraudulent policyholder list on the basis of such sensed information.

The terminal 12 includes, for example, a smartphone. In the fraud check support system 1, a "safe driving discount application (hereinafter referred to as a safety app)" is distributed from an insurance company to its policyholders, and the safety app is installed to the terminal 12. This makes it possible for the terminal 12 to detect, in real time, its state of movement, sense information in the case of movement by car, and send sensed information to the cloud service 11.

The cloud service 11 can have an arbitrary physical configuration. For example, the cloud service 11 may have not only a service for providing fraud check support but also an arbitrary network such as another server, the Internet, or LAN.

The terminal 12 includes, for example, a smartphone, a tablet terminal, a mobile information terminal, vehicle-mounted equipment, equipment with special attachment gadget, wearable equipment such as glasses and a watch, and so on. It should be noted that the terminal 12 may be built in as part of vehicle-mounted GPS equipment or audio equipment or built into the vehicle as standard equipment.

Suspicious cases of fraud can be effectively narrowed down by applying the present technology to the fraud check support system 1 configured as described above and generating a fraud checkpoint list and a possibly fraudulent policyholder list between the terminal 12 and the cloud service 11.

Fig. 2 illustrates a detailed configuration example of the fraud check support system.

In the example illustrated in Fig. 2, the terminal 12 includes a position sensor 51, an inertial sensor 52, an environmental sensor 53, a communication information sensor 54, all of which configure a sensing section 61, a vehicle information storage section 55, a traveling information acquisition section 56, and a transmission section 57.

It should be noted that the sensing section 61 need only include at least the position sensor 51 and the inertial sensor 52 and that the environmental sensor 53 and the communication information sensor 54 may be used as auxiliary sensors.

The position sensor 51 calculates Earth coordinates (i.e., position information) by using radio waves from a satellite such as GPS and supplies the calculated position information to the traveling information acquisition section 56.

The inertial sensor 52 primarily includes an acceleration, an angular velocity (Gyro), odometry, and so on and is used primarily to calculate a dangerous driving level. The acceleration is a key sensor for calculating the dangerous driving level associated with abrupt braking and abrupt acceleration. The angular velocity is a key sensor for calculating the dangerous driving level associated with abrupt steering. Odometry is used to calculate a velocity, and corrections are made through odometry because a danger level varies with the velocity. That is, the dangerous driving level is calculated by processing these pieces of sensor information through linear or nonlinear transform. It should be noted that the velocity can also be acquired from the GPS.

It should be noted that in the case where the dangerous driving level cannot be simply calculated from acceleration and angular velocity, the dangerous driving level is calculated by using machine learning, deep learning, or other technique.

The environmental sensor 53 is a sensor capable of acquiring at least one piece of information from among terrestrial magnetism, atmospheric pressure, temperature, sound, and illuminance. The environmental sensor 53 is used, for example, to modify the dangerous driving level. Parameters for the dangerous driving level may change depending on rain, sunlight, and temperature commensurate with information from the environmental sensor 53. In order to achieve this, multi-input modeling is necessary. As a result, it is difficult to calculate the dangerous driving level simply from acceleration, angular velocity, and so on, thus requiring machine learning, deep learning, or other technique.

The communication information sensor 54 is a radio wave sensor capable of acquiring information from Cellular, Wifi, short-range communication, Bcon, or other means. The communication information sensor 54 is used, for example, as a substitute for position information. For example, information acquired by the communication information sensor 54 is used to determine that the driver is driving dangerously if frequent wireless communication takes place during driving and is used also to determine that the driver is driving dangerously in the case where conversation takes place in the vehicle. In addition, if communicated information itself includes information to be used, such information is input to the traveling information acquisition section 56.

User, vehicle type, policy duration, and so on are among vehicle information, and vehicle information is stored, for example, in the vehicle information storage section 55. Vehicle information is used to confirm authenticity of the vehicle type and the vehicle covered under the policy.

These pieces of information are input to the traveling information acquisition section 56.

The traveling information acquisition section 56 may store, in an 'as-is' manner, information from the sensing section 61 and the vehicle information storage section 55 and send the information to the cloud service 11. Alternatively, in the case where the data size should be desirably reduced in consideration of communication capability, information may be converted commensurate with the dangerous driving level and sent to the transmission section 57. In this case, the parameters for calculating the dangerous driving level, provided from the cloud service 11, are already in place in the traveling information acquisition section 56.

Also, in the case of the example illustrated in Fig. 1, the cloud service 11 includes a reception section 81, a tampering check section 82, a DB processing section 83, a traveling information DB 84, a fraud checkpoint generation section 85, a fraud checkpoint list DB 86, a fraudulent user detection section 87, and a fraud information DB 88.

The reception section 81 receives information from the terminal 12 and supplies received information to the tampering check section 82. The tampering check section 82 performs an accumulative evaluation of the dangerous driving level, which will be described later, as a tampering check and supplies the determination result of the evaluation to the DB processing section 83 and the fraudulent user detection section 87.

The DB processing section 83 creates a location-by-location DB by using traveling information. Although desirably determined to be free from suspicions of fraud, traveling information used here may have not undergone such a determination. In the DB processing section 83, for example, information is clustered for each location, and a statistic of traveling information (used for finding a mean or variance) at that location is found, thus generating the traveling information DB 84. Information of the generated traveling information DB 84 is supplied to the fraud checkpoint generation section 85.

The fraud checkpoint generation section 85 makes, from information of the traveling information DB 84, a list of points statistically satisfying a given relationship and information regarding statistics thereof, that is, extracts, as checkpoints, locations having a statistical tendency that driving is determined as dangerous driving on the basis of a statistical bias of the traveling information, thus generating the fraud checkpoint list DB 86. Information of the fraud checkpoint list DB 86 is input to the tampering check section 82 for accumulative evaluation of suspicions of fraudulent declaration.

The fraudulent user detection section 87 classifies, by using traveling information, the subject into one of three categories, namely, dangerous, normal, and suspected of fraud, generates a target possibly fraudulent policyholder list from policyholder IDs suspected of fraud, and registers the list as the fraud information DB 88. That is, the fraudulent user detection section 87 detects subjects suspected of fraud by making a determination on traveling information suspected of fraud on the basis of data statistically processed from the traveling information at the checkpoints of the fraud checkpoint list DB 86. This list is effective for making a list of policyholders suspected of fraud from among an enormous number of policyholders. A possible course of action thereafter would be to remove discount eligibility of the policyholders suspected of fraud in an 'as-is' manner. However, there is a risk that safe drivers may be erroneously treated as drivers suspected of fraud. Therefore, it is desirable that the policyholders suspected of fraud should further be narrowed down separately.

It should be noted that although the terminal 12 and the cloud service 11 are separated between the traveling information acquisition section 56 and the tampering check section 82 in Fig. 2, the separation is not limited to this position. For example, the tampering check section 82 may be included in the terminal 12, and at least either the DB processing section 83 or the fraudulent user detection section 87 may be included in the terminal 12. That is, it is only necessary for the respective sections illustrated in Fig. 2 to be included as the fraud check support system 1, and it does not matter whether each section is provided in the terminal 12 or in the cloud service 11.

<Processing Example of the Fraud Check Support System>

A description will be given next of processes performed by the terminal 12 of the fraud check support system 1 with reference to the flowchart illustrated in Fig. 3.

It should be noted that in the case where a service is received from the fraud check support system 1, a "safe driving discount application (hereinafter referred to as a safety application)" is distributed first from an insurance company to its policyholders. The distribution may be made by delivery through the Internet or by using a recording medium. Also, equipment having the application installed may be rented out rather than distributing the application.

When a policyholder installs the safety application to the terminal 12, the traveling information acquisition section 56 and the transmission section 57 depicted in Fig. 2 are configured in a CPU, not illustrated, of the terminal 12.

The traveling information acquisition section 56 extracts, in real time, the state of movement of the policyholder in step S11. For example, standstill, walking, moving by car, moving by train, and so on are extracted. The traveling information acquisition section 56 determines, in step S12, whether or not the state of movement of the policyholder is by car. In the case where it is determined in step S12 that the policyholder is not moving by car, the process returns to step S11, and the steps from step S11 onwards are repeated.

In the case where it is determined in step S12 that the policyholder is moving by car, the process proceeds to step S13. In step S13, the traveling information acquisition section 56 determines whether or not the vehicle is covered under the policy from the vehicle information of the vehicle information storage section 55. In the case where it is determined in step S13 that the vehicle is not covered under the policy, the process returns to step S11, and the steps from step S11 onwards are repeated.

In the case where it is determined in step S13 that the vehicle is covered under the policy, the process proceeds to step S14. In step S14, the traveling information acquisition section 56 records acquired or calculated vehicle information, sensor information (e.g., GPS), and danger/safety level (calculated from acceleration and so on) on the basis of information of the position sensor 51, the inertial sensor 52, the environmental sensor 53, the communication information sensor 54, and the vehicle information storage section 55.

In step S15, the traveling information acquisition section 56 uploads the recorded information to the server of the cloud service 11 via the transmission section 57. This upload is performed on a regular basis.

As described above, the vehicle information, the sensor information, and the danger/safety level of the vehicle covered under the policy is uploaded to the server of the cloud service 11 as traveling information of the policyholder's vehicle.

However, it is likely that fraudulent policyholders will tamper with the dangerous driving level and data for calculating the dangerous driving level by using a file tampering application or other type of application or tamper directly with the dangerous driving level and a file for calculating the dangerous driving level.

A description will be given of processes performed by the server of the cloud service 11 in the fraud check support system 1 to guard against such tampering with reference to the flowchart illustrated in Fig. 4.

In step S31, the reception section 81 receives policyholder's uploaded data (vehicle traveling information) and supplies the received uploaded data to the tampering check section 82.

In step S32, the tampering check section 82 generates, together with the DB processing section 83 to the fraud checkpoint generation section 85, a fraud checkpoint list by using the policyholder's uploaded data. Although the generation of this fraud checkpoint list will be described later with reference to Fig. 5, a fraud checkpoint list is generated by finding statistics of traveling information at certain locations for generation of the traveling information DB 84 and by using a statistical bias from the traveling information DB 84, that is, by making a list of points statistically satisfying a given relationship and points having information regarding statistics thereof, and the fraud checkpoint list is registered in the fraud checkpoint list DB 86.

In step S33, the tampering check section 82 generates, together with the fraudulent user detection section 87, a possibly fraudulent policyholder list by using the policyholder's uploaded data and with reference to the fraud checkpoint list. Although the generation of this possibly fraudulent policyholder list will be described later with reference to Fig. 6, a possibly fraudulent policyholder list is generated by using traveling information determined to be suspected of fraud, and the possibly fraudulent policyholder list is registered as the fraud information DB 88.

With reference to the possibly fraudulent policyholder list generated as described above, the insurance company carries out a fraud confirmation/investigation on the policyholders suspected of fraud, i.e., the possibly fraudulent policyholders. In the case where a fraud is found, a correction request can be issued, and in the case where no contact is made or no improvement is observed, "safe driving discount eligibility" can be removed.

It should be noted that although, in the example illustrated in Fig. 4, the terminal 12 such as a smartphone was taken as an example, a special attachment gadget may be mounted on the vehicle in the example. Also, although an example of safe driving discount eligibility in an insurance company was described, the present technology is applicable to revision of insurance premium rates at the time of renewal of the insurance policy and so on.

A description will be given next of a fraud checkpoint list generation process in step S32 in Fig. 4 with reference to the flowchart illustrated in Fig. 5.

In step S51, the tampering check section 82 acquires traveling information from the policyholder's uploaded data supplied from the reception section 81. In step S52, the tampering check section 82 performs a tampering check. It should be noted that the tampering check here is intended to prevent addition of fraudulent traveling information during update of the traveling information DB 84 and is not essential.

In step S53, the DB processing section 83 updates the traveling information DB 84 by using the traveling information. That is, the DB processing section 83 clusters information for each location by using the traveling information and finds a statistic of traveling information (used for finding a mean or variance) at that location, thus updating the traveling information DB 84. This allows information from a variety of users to be merged. It should be noted that it is even better to use traveling information determined to be free from fraud in step S52. As a result, information free from tampering is merged.

It should be noted that information can be retrieved from the traveling information DB 84 by using a policyholder as a key. However, the traveling information DB 84 is not specifically tailored to policyholders. The traveling information DB 84 is intended to create statistical information.

In step S54, the fraud checkpoint generation section 85 makes, from the information in the traveling information DB 84, a list of points statistically satisfying a given relationship and information regarding statistics thereof, that is, a list of locations where a conspicuous characteristic is likely to manifest itself in the case of suspicion of fraud, thus updating the fraud checkpoint list DB 86 which is a fraud checkpoint list.

A description will be given next of a possibly fraudulent policyholder list generation process in step S33 in Fig. 3 with reference to the flowchart illustrated in Fig. 6.

In step S71, the tampering check section 82 acquires traveling information from the policyholder's uploaded data supplied from the reception section 81. In step S72, the tampering check section 82 performs a tampering check. It should be noted that the tampering check will be described in detail later with reference to Fig. 12.

In step S73, the tampering check section 82 performs a confirmation test. That is, the tampering check section 82 performs a tampering check in a manner different from the tampering check performed in step S72.

In step S74, the fraudulent user detection section 87 classifies, by using traveling information from the vehicle, the subject into one of three categories, namely, dangerous, normal, and suspected of fraud, generates a target possibly fraudulent policyholder list from policyholder IDs suspected of fraud, and registers the list as the fraud information DB 88.

It should be noted that whether to perform the confirmation test in step S73 or create a target possibly fraudulent policyholder list in step S74 first, namely, the sequence thereof, is not necessarily important. A target possibly fraudulent policyholder list may be created first followed by subjection of the possibly fraudulent policyholders to some kind of accurate process for detection of such possibly fraudulent policyholders as in a screening process.

Alternatively, a confirmation test may be performed each time before creation of a target possibly fraudulent policyholder list so that an accurate possibly fraudulent policyholder list is created from the beginning.

As described above, the key feature of the present technology is to calculate the following from vehicle traveling information of a number of policyholders:

- Fraud checkpoint list (database)
- Possibly fraudulent policyholder list (database)

<Details of the Fraud Checkpoint List>

A description will be given next of the fraud checkpoint list with reference to Fig. 7. In the example illustrated in Fig. 7, fraud checkpoints P1 to P5 are depicted on a map 101.

Broadly speaking, a fraud checkpoint refers to a location where simply driving as usual (i.e., even normal driving) tends to be determined as dangerous driving. The following are examples of such locations:

- Railroad crossings and steep slopes (sloping terrains)
- Mountain roads (e.g., winding roads such as Irohazaka Winding Road)
- Narrow parking areas, tollgates, and junctions

For example, a railroad crossing depicted at P1 and a steep slope (sloping terrain) depicted at P2 require considerably abrupt acceleration even in normal driving because of their feature, i.e., one must finish crossing them in one stroke. In the case where the abrupt acceleration is done on an ordinary road, this may run the risk of being determined as dangerous driving.

Also, on a winding mountain road such as Irohazaka Winding Road, abrupt steering is required. This abrupt steering, in the case where this is done on an ordinary road, may also run the risk of being determined as dangerous driving.

There are cases where abrupt braking is required in narrow parking areas and at tollgates, junctions, and intersections depicted at P3 to P5, respectively. Abrupt braking is also probably determined as dangerous driving as are abrupt steering and abrupt acceleration.

It should be noted that fraud checkpoints are a mere prediction of likelihood of listing of such locations as a result of dangerous driving false positive points (erroneously classified as dangerous driving) such as abrupt steering, abrupt braking, and abrupt acceleration rather than listing of specific locations as described above.

<Details of Dangerous Driving False Positive Points>

A more specific description will be given of a dangerous driving false positive point.

As described above, a false positive point refers to a location where one tends to resort to abrupt steering, abrupt acceleration, abrupt braking, and so on even while driving as usual.

A description will be given below of a false positive point by taking, as an example, abrupt acceleration with reference to Fig. 8. Fig. 8 is a diagram describing a frequency distribution characteristic of acceleration (norm) at a false positive point (for illustrative purposes only). As illustrated in Fig. 8, it is likely that a frequency distribution having relatively large acceleration as a mean will be formed at a point where one tends to resort to abrupt acceleration. At a railroad crossing or other locations, even a safe driver is required to resort to abrupt acceleration. As a result, a "narrow" Gaussian distribution manifests itself in a dangerous region.

On the other hand, a policyholder making a fraudulent declaration is likely to fail in achieving this characteristic and fraudulently declare smaller acceleration in an across-the-board manner. For this reason, a deviation value for dangerous driving is extremely low even at a checkpoint where one normally tends to accelerate abruptly.

Here, the dangerous driving deviation value (deviation value for danger) is defined as depicted in the following formula (1):

[Math. 1]

$$x = \frac{a - \mu}{\sigma} \quad \cdots (1)$$

where 'a' is the acceleration (absolute value thereof and will be hereinafter omitted) of the policyholder at this location, $\mu$ is the mean acceleration of all the policyholders at this location, and $\sigma$ is the standard deviation (square root of variance) of the acceleration at this location.

For example, when this value drops to -3 or less, the dangerous driving deviation value is considered extremely low (a ratio of 5% or less of all policyholders in the case of a Gaussian distribution). Although may be interpreted as the policyholder's strong intention to practice safe driving, such a low deviation value can also be considered possibly fraudulent.

A threshold at which suspicion of fraud is initially raised should preferably be decided commensurate with actual usage. For example, in the case where it is found, after actual usage, that the threshold is set too high and leads to an excessively low precision value (a ratio of truly fraudulent policyholders among the detected policyholders) (i.e., many policyholders suspected of fraud are actually not fraudulent), the threshold will not prove very effective as screening. One possible option would, therefore, be to reduce the threshold.

Although fraud detection at a fraud checkpoint has been described above, a description will be given next of how a fraud checkpoint itself is decided.

As described above, a fraud checkpoint refers to a point where the dangerous driving level tends to be high. The dangerous driving level is linked to acceleration in the case of abrupt acceleration and abrupt braking and absolute value of angular velocity in the case of abrupt steering. As described above, a point where the dangerous driving level is likely to be high in an across-the-board manner is suitable as a fraud checkpoint. Therefore, a fraud checkpoint is a location having the relationship depicted in the following formula (2) between the mean acceleration $\mu$ and standard deviation $\sigma$ described earlier, for example:

[Math. 2]

$$\mu > \varepsilon \sigma \quad \cdots (2)$$

where $\varepsilon$ is the constant equal to or greater than 0 and is, for example, approximately 3.

Representing a fraud checkpoint satisfying the formula (2) given above and a non-fraud checkpoint not satisfying the formula (2) in terms of frequency distribution, the two points are depicted, respectively, as illustrated in Fig. 9.

In the case of the fraud checkpoint on the left in Fig. 9, it can be seen that the dangerous driving level is likely to be high, and therefore, driving tends to be determined as dangerous, and that, further, because a distribution width thereof, i.e., a standard deviation thereof, is small, driving is likely to be determined as dangerous. For this reason, a driver whose danger level is extremely low at such a location is either a safe driver or suspected to be a fraudulent driver.

On the other hand, in the case of the non-fraud checkpoint on the right in Fig. 9, the standard deviation is larger than the mean dangerous driving level. For this reason, the number of drivers whose dangerous driving level is extremely low is not so small, making such a checkpoint not so suitable for screening.

As described above, a fraud checkpoint is a location where the dangerous driving level is likely to be high and the distribution thereof (variance = square of standard deviation) is small.

<Accumulative Evaluation>

As described above, while fraud checkpoints and a fraud check method are a possible option, they are still insufficient for actual usage in terms of distinction between the case of coincidental safe driving and the case of suspicion of fraud. For this reason, a possible option for more accurate distinction would be an accumulative evaluation of fraud checkpoints on the route.

Accumulative evaluation is designed to add up the dangerous driving levels at a plurality of fraud checkpoints on the driving route actually traveled by the policyholder as illustrated in Fig. 10 for evaluation. This accumulative evaluation is conducted by the tampering check section 82.

For example, we let a deviation value $x_k$ of the above acceleration at a certain fraud checkpoint k be denoted as the dangerous driving level $d_k$. Letting a set of fraud checkpoints on the route be denoted as K={$k_1$, $k_2$, $\cdots k_N$}, the total dangerous driving level is most simply calculated as in the following formula (3):

[Math. 3]

$$D_K = \sum_{k \in K} d_k \quad \cdots (3)$$

The above formula (3) may be modified into a weighted sum or standardized by a route length, the number of checkpoints, time, and so on. It should be noted that the route may be per drive or per given time period (number of days).

Such an accumulative evaluation makes it possible to avoid determining a policyholder who was coincidentally driving safe to be fraudulent, thus realizing a more appropriate fraudulent policyholder check.

<Simultaneous Determination on Dangerous Driving or Suspicion of Fraud>

It should be noted that drivers can be classified into one of three categories, namely, dangerous driver, driver suspected of fraud, and normal driver by using the above cumulative danger level and so on.

Fig. 11 is a diagram depicting a cumulative danger level and dangerous, normal, and fraudulent regions in the case where the number of checkpoints is taken along a horizontal axis, and the cumulative danger level is taken along a vertical axis. Although the respective regions are separated one from the other by straight lines in the example illustrated in Fig. 11, there is a possibility that these divisions may not be necessarily linear. In such a case, machine learning techniques such as a support vector machine and neural network discrimination through deep learning should be used rather than simple linear separation.

Datasets are required in advance to use a machine learning technique. This time, the following datasets are required.

- Data list at fraud checkpoints
- Actual determination result of this policyholder into dangerous, normal, or suspected of fraud.

Here, if it is difficult to collect labeled data, it is only necessary to use a machine learning technique suitable for cases with a small number of labels such as semi-supervised learning, weak supervised learning, and domain adaptation.

It should be noted that a machine learning technique may be used to discriminate between fraud and non-fraud checkpoints.

A description will be given next of an example of a tampering check process in step S52 in Fig. 5 or in step S72 in Fig. 6 with reference to the flowchart illustrated in Fig. 12.

In step S101, the tampering check section 82 acquires traveling information from the policyholder's uploaded data supplied from the reception section 81. In step S102, the tampering check section 82 calculates the danger level (continuous value) from the inertial sensor 52.

In step S103, the tampering check section 82 accumulates traveling information along the route. In step S104, the tampering check section 82 determines whether or not the policyholder is fraudulent.

In the case where it is determined in step S104 that the policyholder is fraudulent, the process proceeds to step S105, and the policyholder is listed as suspected of fraud. In the case where it is determined in step S104 that the policyholder is not fraudulent, the process is terminated.

It should be noted that the discrimination between fraudulent and non-fraudulent policyholders may be made per drive, per given time period, when the accumulated value exceeds a set value, or at other timings as described above.

Also, in Fig. 12, the accumulation process in step S103 may be moved before step S102 (after step S101) so that the danger level calculation process in step S102 and the fraudulent/non-fraudulent discrimination in step S104 are machine-learned. At that time, setting of a safe driving level and designing of fraudulent/non-fraudulent discrimination may be added respectively before the danger level calculation and the fraudulent/non-fraudulent discrimination first before machine learning. This contributes to improved accuracy.

<Effect of the Present Technology>

Fig. 13 is a diagram illustrating an example of possible fraud and tampering of traveling information (dangerous driving information in particular) first to describe the effect achieved by the present technology.

App tampering, data tampering, driven by good substitute driver, slower response, and temporary halting of sensor in a first row in Fig. 13 are probably typical examples of frauds. In the case where a smartphone is used, all these tampering situations are possible. In the case where a dedicated sensor is used, there is a likelihood of data tampering and a substitute driver. However, app tampering, slower response, and temporary halting of sensor are unlikely. Of these, the present technology can deal with the tampering situations enclosed by bold lines.

- App tampering refers to tampering of a traveling information collection application and so on. Here, a traveling information collection application refers to the following:

  - Collects raw traveling information data.
  - Alternatively, collects quantities calculated from traveling information such as dangerous driving level.
  - For example, as a dangerous driving level, a calculation formula such as dangerous driving level = Tanh (|acceleration| /threshold acceleration) or the like is possible. The threshold acceleration is a constant decided in advance by the manufacturer or other party.
  - These pieces of data are sent to the insurance company's server.

- There is no restriction as to whether the calculation of the dangerous driving level and other data is handled by the terminal or the server. Also, a fraudulent application (fraudulent app) refers to an application available in an underground or other website that, for example, claims that the application, if used, allows anybody to receive a discount on his or her property insurance premium. Anybody can commit a fraud if he or she knows the existence of the underground website. Therefore, this kind of fraud entails the highest risk.

- Data tampering is an example of direct tampering of a log file.

Log file refers to a file that keeps record of raw traveling information data, dangerous driving level data, or other data collected by the traveling information collection application described above.

Although tampering of a log file requires thorough knowledge regarding a log file format and security, making log file tampering less likely than the tampering by means of an application, still it is expected to exist.

- Slower response is, for example, a way of delaying transfer of acceleration from the vehicle by suspension from the ceiling. This can be performed by any user, thus entailing a high risk.
- Temporary halting of sensor produces data that certainly looks fraudulent, making it a type of fraud for which the present technology is not targeted. However, there is a possibility that other data may be inserted where the sensor is temporarily halted.

Therefore, the present technology permits screening of suspicious cases of fraud as described above, thus making it possible to effectively narrow down suspicious cases of fraud. For example, it is possible to realize a real-time check on the movements of only those policyholders suspected of fraud after screening on a large monitor or a cross check (on any inconsistency in traveling position, coordinates, velocity, and actual data). This makes it possible to effectively narrow down suspicious cases of fraud.

<Personal Computer>

The series of processes described above can be performed by hardware or software. In the case where the series of processes are performed by software, the program included in the software is installed to a computer. Here, the computer includes a computer built into dedicated hardware and, for example, a general-purpose personal computer capable of performing various functions when various programs are installed.

Fig. 14 is a block diagram illustrating a hardware configuration example of a personal computer for performing some or all of the above series of processes by using a program.

In a personal computer 200, a CPU (Central Processing Unit) 201, a ROM (Read Only Memory) 202, and a RAM (Random Access Memory) 203 are connected to each other by a bus 204.

An input/output interface 205 is further connected to the bus 204. An input section 206, an output section 207, a storage section 208, a communication section 209, and a drive 210 are connected to the input/output interface 205.

The input section 206 includes a keyboard, a mouse, a microphone, and so on. The output section 207 includes a display, a speaker, and so on. The storage section 208 includes a hard disk, a non-volatile memory, and so on. The communication section 209 includes a network interface and so on. The drive 210 drives a removable recording medium 211 such as a magnetic disk, an optical disc, a magneto-optical disk, or a semiconductor memory.

In the personal computer 200 configured as described above, the CPU 201 loads, for example, the program stored in the storage section 208 into the RAM 203 via the input/output interface 202 and the bus 204 for execution, thereby allowing the above series of processes to be performed.

The program executed by the computer (CPU 201) can be provided recorded, for example, in the removable recording medium 211. The removable medium 211 is, for example, a packaged medium such as a magnetic disk (including flexible disk), optical disc (CD-ROM (Compact Disc-Read Only Memory), DVD (Digital Versatile Disc), etc.), magneto-optical disk, or semiconductor memory. Also, the program can be alternatively provided via a wired or wireless transport medium such as local area network, the Internet, and digital satellite broadcasting.

In the computer, the program can be installed to the storage section 208 via the input/output interface 205 by inserting the removable recording medium 211 into the drive 210. Alternatively, the program can be received by the communication section 209 via a wired or wireless transport medium and installed to the storage section 208. In addition to the above, the program can be installed, in advance, to the ROM 202 or the storage section 208.

It should be noted that the program executed by the computer may perform the processes chronologically in accordance with the sequence described in the present specification. Alternatively, the program may perform the processes in parallel or when necessary such as when the program is invoked.

It should be noted that, in the present specification, the steps describing the program recorded on a recording medium include not only processes carried out chronologically in accordance with the sequence described but also processes carried out in parallel or individually if not necessarily carried out chronologically.

Also, in the present specification, the system represents the apparatus as a whole that includes a plurality of devices (apparatuses).

For example, the present disclosure can have a cloud computing configuration in which a plurality of apparatuses processes one function in a shared and cooperative manner via a network.

It should be noted that, in the above description, a component described above as one apparatus (or processing section) may be divided and configured as a plurality of apparatuses (processing sections). Conversely, components described above as a plurality of apparatuses (processing sections) may be combined and configured as a single apparatus (processing section). Also, naturally, a component other than those described above may be added to the component of each of the apparatuses (or processing sections). Further, as long as the components and operation of the system as a whole substantially remain the same, part of the component of a certain apparatus (or processing section) may be included in the component of other apparatus (or processing section). That is, the present technology is not limited to the embodiment described above, and various modifications can be made without departing from the gist of the present technology.

While a preferred embodiment of the present disclosure has been described in detail above with reference to the accompanying drawings, the present disclosure is not limited to such an example. Various examples of changes or modifications within the scope of technical concepts described in claims can be conceived of by those having ordinary knowledge in the technical field to which the present disclosure pertains, and these are also naturally construed as falling within the technical scope of the present disclosure.

It should be noted that the present technology can also have the following configurations:

(1) An information processing apparatus including:

a checkpoint generation section adapted to extract, as a checkpoint, a location having a statistical tendency that driving is determined as dangerous driving on the basis of a statistical bias of traveling information of a vehicle; and a wrongdoer detection section adapted to make a determination on traveling information suspected of fraud and detect a subject suspected of fraud on the basis of data statistically processed from the traveling information at the checkpoint extracted by the checkpoint generation section.

(2) The information processing apparatus of feature (1), in which
the wrongdoer detection section detects the wrongdoer on the basis of a frequency distribution of the traveling information at the checkpoint.

(3) The information processing apparatus of feature (1) or (2), in which
the wrongdoer detection section detects the wrongdoer as a fraud suspect in a case where an absolute value of a deviation from a mean of all the traveling information at the checkpoint is higher than a given threshold.

(4) The information processing apparatus of any one of features (1) to (3) further including:

a tampering check section adapted to accumulate, by using the traveling information, indices representing dangerous driving at a plurality of checkpoints on a driving route where the subject actually drove for evaluation, in which
the wrongdoer detection section detects the wrongdoer with reference to the evaluation of the tampering check section.

(5) The information processing apparatus of feature (4), in which
the wrongdoer detection section detects the wrongdoer by classifying the subject into one of three categories, namely, dangerous, normal, and suspected of fraud with reference to the indices representing dangerous driving accumulated by the tampering check section.

(6) The information processing apparatus of any one of features (1) to (5) further including:

a database processing section adapted to generate a traveling information database by clustering the traveling information for each location and finding a statistic of the traveling information for each location, in which
the checkpoint generation section extracts the checkpoint with reference to the traveling information database generated by the database processing section.

(7) The information processing apparatus of feature (6), in which
the checkpoint generation section extracts, as the checkpoint, a location where the mean of values indicated by the indices representing dangerous driving is large and where a distribution thereof is small.

(8) The information processing apparatus of any one of features (1) to (7), in which
the checkpoint includes a location where there is a significant tendency that at least one of three determinations, namely, abrupt braking, abrupt steering, and abrupt acceleration, is made in a determination regarding dangerous driving.

(9) The information processing apparatus of any one of features (1) to (8), in which
the traveling information includes vehicle information of the vehicle, locations, sensor information, or information acquired by processing these pieces of sensor information by using linear or non-linear transform.

(10) An information processing method including:

by an information processing apparatus extracting, as a checkpoint, a location having a statistical tendency that driving is determined as dangerous driving on the basis of a statistical bias of traveling information of a vehicle; and detecting a subject suspected of fraud by making a determination on traveling information suspected of fraud on the basis of data statistically processed from the traveling information at the checkpoint extracted.

(11) A program causing a computer to function as:

a checkpoint generation section adapted to extract, as a checkpoint, a location having a statistical tendency that driving is determined as dangerous driving on the basis of a statistical bias of traveling information of a vehicle; and a wrongdoer detection section adapted to make a determination on traveling information suspected of fraud and detect a subject suspected of fraud on the basis of data statistically processed from the traveling information at the checkpoint extracted by the checkpoint generation section.

(12) An information processing system including:

a terminal including

an information acquisition section adapted to acquire traveling information of a vehicle from a policyholder, and a transmission section adapted to send the acquired traveling information of the vehicle; and

an information processing apparatus including

a checkpoint generation section adapted to extract, as a checkpoint, a location having a statistical tendency that driving is determined as dangerous driving on the basis of a statistical bias of the traveling information of the vehicle sent from the transmission section, and a wrongdoer detection section adapted to detect a subject suspected of fraud by making a determination on traveling information suspected of fraud on the basis of data statistically processed from the traveling information at the checkpoint extracted by the checkpoint generation section.

[Reference Signs List]

1 Fraud check support system, 11 Cloud service, 12 Terminal, 51 Position sensor, 52 Inertial sensor, 53 Environmental sensor, 54 Communication information sensor, 55 Vehicle information storage section, 56 Traveling information acquisition section, 81 Reception section, 82 Tampering check section, 83 DB processing section, 84 Traveling information DB, 85 Fraud checkpoint generation section, 86 Fraud checkpoint list DB, 87 Fraudulent user detection section, 88 Fraud information DB, 200 Personal computer

**Claims**

1. An information processing apparatus comprising:

   a checkpoint generation section adapted to extract, as a checkpoint, a location having a statistical tendency that driving is determined as dangerous driving on a basis of a statistical bias of traveling information of a vehicle; and a wrongdoer detection section adapted to make a determination on traveling information suspected of fraud and detect a subject suspected of fraud on a basis of data statistically processed from the traveling information at the checkpoint extracted by the checkpoint generation section.

2. The information processing apparatus of claim 1, wherein
   the wrongdoer detection section detects the wrongdoer on a basis of a frequency distribution of the traveling information at the checkpoint.

3. The information processing apparatus of claim 2, wherein
   the wrongdoer detection section detects the wrongdoer as a fraud suspect in a case where an absolute value of a deviation from a mean of all the traveling information at the checkpoint is higher than a given threshold.

4. The information processing apparatus of claim 1, further comprising:

   a tampering check section adapted to accumulate, by using the traveling information, indices representing dangerous driving at a plurality of checkpoints on a driving route where the subject actually drove for evaluation, wherein the wrongdoer detection section detects the wrongdoer with reference to the evaluation of the tampering check section.

5. The information processing apparatus of claim 4, wherein

the wrongdoer detection section detects the wrongdoer by classifying the subject into one of three categories, namely, dangerous, normal, and suspected of fraud with reference to the indices representing dangerous driving accumulated by the tampering check section.

6. The information processing apparatus of claim 1, further comprising:

a database processing section adapted to generate a traveling information database by clustering the traveling information for each location and finding a statistic of the traveling information for each location, wherein
the checkpoint generation section extracts the checkpoint with reference to the traveling information database generated by the database processing section.

7. The information processing apparatus of claim 6, wherein
the checkpoint generation section extracts, as the checkpoint, a location where the mean of values indicated by the indices representing dangerous driving is large and where a distribution thereof is small.

8. The information processing apparatus of claim 1, wherein
the checkpoint includes a location where there is a significant tendency that at least one of three determinations, namely, abrupt braking, abrupt steering, and abrupt acceleration, is made in a determination regarding dangerous driving.

9. The information processing apparatus of claim 1, wherein
the traveling information includes vehicle information of the vehicle, locations, sensor information, or information acquired by processing these pieces of sensor information by using linear or non-linear transform.

10. An information processing method comprising:
by an information processing apparatus

extracting, as a checkpoint, a location having a statistical tendency that driving is determined as dangerous driving on a basis of a statistical bias of traveling information of a vehicle; and
detecting a subject suspected of fraud by making a determination on traveling information suspected of fraud on a basis of data statistically processed from the traveling information at the checkpoint extracted.

11. A program causing a computer to function as:

a checkpoint generation section adapted to extract, as a checkpoint, a location having a statistical tendency that driving is determined as dangerous driving on a basis of a statistical bias of traveling information of a vehicle; and
a wrongdoer detection section adapted to make a determination on traveling information suspected of fraud and detect a subject suspected of fraud on a basis of data statistically processed from the traveling information at the checkpoint extracted by the checkpoint generation section.

12. An information processing system comprising:

a terminal including

an information acquisition section adapted to acquire traveling information of a vehicle, and
a transmission section adapted to send the acquired traveling information of the vehicle; and

an information processing apparatus including

a checkpoint generation section adapted to extract, as a checkpoint, a location having a statistical tendency that driving is determined as dangerous driving on a basis of a statistical bias of the traveling information of the vehicle sent from the transmission section, and
a wrongdoer detection section adapted to detect a subject suspected of fraud by making a determination on traveling information suspected of fraud on a basis of data statistically processed from the traveling information at the checkpoint extracted by the checkpoint generation section.

FIG.1

EP 3 576 067 A1

# FIG. 2

# FIG.3

START OF PROCESSES
ON TERMINAL

EXTRACT STATE OF MOVEMENT — S11

S12

NO ← IS STATE OF MOVEMENT
BY CAR?

YES

S13

NO ← VEHICLE COVERED
UNDER POLICY?

YES

RECORD VEHICLE INFORMATION, SENSOR
INFORMATION, AND DRIVING SAFETY LEVEL — S14

UPLOAD RECORDED INFORMATION TO SERVER — S15

# FIG. 4

START OF PROCESSES
ON SERVER

RECEIVE UPLOADED POLICYHOLDER DATA S31

GENERATE FRAUD CHECKPOINT LIST S32

GENERATE POSSIBLY FRAUDULENT
POLICYHOLDER LIST S33

PERFORM FRAUD CONFIRMATION/INVESTIGATION S34

END

# FIG.5

```
┌─────────────────────────────┐
│   START OF FRAUD CHECKPOINT  │
│     LIST GENERATION PROCESS  │
└─────────────────────────────┘
                │
                ▼
┌─────────────────────────────┐
│ ACQUIRE TRAVELING INFORMATION│ S51
└─────────────────────────────┘
                │
                ▼
┌─────────────────────────────┐
│    PERFORM TAMPERING CHECK   │ S52
└─────────────────────────────┘
                │
                ▼
┌─────────────────────────────┐
│ UPDATE TRAVELING INFORMATION DB│ S53
└─────────────────────────────┘
                │
                ▼
┌─────────────────────────────┐
│  UPDATE FRAUD CHECKPOINT LIST│ S54
└─────────────────────────────┘
                │
                ▼
           ┌─────────┐
           │  RETURN │
           └─────────┘
```

# FIG.6

```
        ┌─────────────────────────┐
        │    START OF POSSIBLY     │
        │  FRAUDULENT POLICYHOLDER │
        │  LIST GENERATION PROCESS │
        └─────────────────────────┘
                     │
                     ▼
    ┌─────────────────────────────────┐  S71
    │   ACQUIRE TRAVELING INFORMATION  │
    └─────────────────────────────────┘
                     │
                     ▼
    ┌─┤─────────────────────────────┤─┐  S72
    │   PERFORM TAMPERING CHECK        │
    └─┤─────────────────────────────┤─┘
                     │
                     ▼
    ┌─────────────────────────────────┐  S73
    │    PERFORM CONFIRMATION TEST      │
    └─────────────────────────────────┘
                     │
                     ▼
┌───────────────────────────────────────────┐  S74
│ GENERATE POSSIBLY FRAUDULENT POLICYHOLDER LIST │
└───────────────────────────────────────────┘
                     │
                     ▼
            ┌─────────────────┐
            │      RETURN       │
            └─────────────────┘
```

# FIG.7

101

# FIG.8

FRAUD CHECKPOINT

TAPERING PERSON:
EXTREMELY LOW DEVIATION
VALUE FOR DANGER

ABRUPT ACCELERATION
(DANGEROUS DRIVING)

ACCELERATION

# FIG.9

FRAUD CHECKPOINT

FREQUENCY

HIGH DANGEROUS
DRIVING LEVEL

SMALL VARIANCE

DANGEROUS DRIVING
LEVEL
(eg ACCELERATION)

NON-FRAUD CHECKPOINT

ACCELERATION

EP 3 576 067 A1

# FIG.10

FRAUD CHECKPOINTS

TRAVELING ROUTE

# FIG.11

$$d_{total} = \sum_k D_k$$

CUMULATIVE
DANGER LEVEL

DANGEROUS
DRIVING DOMAIN

ANTICIPATED DANGER LEVEL

DANGER LEVEL
SUSPECTED OF FRAUD

VALUE OF CUMULATIVE DANGER
LEVEL ON ACTUAL ROUTE

FRAUD CHECKPOINT COUNT

24

# FIG.12

```
        ┌─────────────────────────┐
        │   START OF TAMPERING     │
        │     CHECK PROCESS        │
        └─────────────────────────┘
                    │
                    ▼
   ┌─────────────────────────────────────┐
   │   ACQUIRE TRAVELING INFORMATION     │ S101
   └─────────────────────────────────────┘
                    │
                    ▼
   ┌─────────────────────────────────────┐
   │ CALCULATE DANGER LEVEL FROM INERTIAL SENSOR │ S102
   └─────────────────────────────────────┘
                    │
                    ▼
   ┌─────────────────────────────────────┐
   │            ACCUMULATE               │ S103
   └─────────────────────────────────────┘
                    │
                    ▼
              S104
           ◇─────────◇
          │  FRAUD?   │──── NO ────┐
           ◇─────────◇            │
               │ YES               │
               ▼                   │
   ┌─────────────────────────────┐ │
   │  LIST AS SUSPECTED OF FRAUD │ S105
   └─────────────────────────────┘ │
               │◄──────────────────┘
               ▼
         ┌──────────┐
         │  RETURN  │
         └──────────┘
```

# FIG.13

| | APP TAMPERING | DATA TAMPERING | DRIVEN BY GOOD SUBSTITUTE DRIVER | SLOWER RESPONSE | TEMPORARY HALTING OF SENSOR |
|---|---|---|---|---|---|
| SMARTPHONE | YES | YES | YES | YES (HANGING FROM CEILING) | YES |
| DEDICATED SENSOR | DIFFICULT | YES? | YES | DIFFICULT | DIFFICULT |

EP 3 576 067 A1

# FIG.14

## INTERNATIONAL SEARCH REPORT

| International application No. |
| --- |
| PCT/JP2018/000953 |

### A. CLASSIFICATION OF SUBJECT MATTER
Int.Cl. G08G1/00(2006.01)i, G06Q40/08(2012.01)i, G08G1/13(2006.01)i

According to International Patent Classification (IPC) or to both national classification and IPC

### B. FIELDS SEARCHED

Minimum documentation searched (classification system followed by classification symbols)
Int.Cl. G08G1/00, G06Q40/08, G08G1/13

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2004-234260 A (HITACHI, LTD.) 19 August 2004, entire text, all drawings (Family: none) | 1-12 |
| A | JP 2000-163609 A (AISIN SEIKI CO., LTD.) 16 June 2000, entire text, all drawings & US 2003/0189498 A1 & WO 2000/022579 A1 & EP 1120749 A1 & NO 20011648 A & CN 1323428 A & HK 1041960 A & KR 10-0423779 B | 1-12 |
| A | JP 2006-221237 A (OMRON CORP.) 24 August 2006, entire text, all drawings (Family: none) | 1-12 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 April 2018 (03.04.2018) | 17 April 2018 (17.04.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016147600 A